# EUROPEAN PATENT APPLICATION

(11) **EP 4 576 540 A1**
(43) Date of publication of application: **25.06.2025**
(21) Application number: 23853965.4
(22) Date of filing: 08.05.2023
(51) Int. Cl.: H02M 3/158, H02M 1/088, H02M 1/32, H02J 3/38

(54) **FLYING CAPACITOR THREE-LEVEL DC-DC CONVERTER, PHOTOVOLTAIC SYSTEM AND CONTROL METHOD**

(30) Priority: 18.08.2022 CN 202210992839
(71) Applicant: Sungrow Power Supply Co., Ltd., Hefei, Anhui 230088 (CN)
(72) Inventor: WANG, Changyou, Hefei, Anhui 230088 (CN); CHEN, Changchun, Hefei, Anhui 230088 (CN)
(74) Representative: Epping - Hermann - Fischer
(86) International application number: PCT/CN2023/092676
(87) International publication number: WO 2024/037058

(57) **Abstract**

Disclosed in the present application are a flying capacitor three-level DC-DC converter, a photovoltaic system and a control method. The flying capacitor three-level DC-DC converter comprises: an inductor, a first switch tube, a second switch tube, a first diode, a second diode, a third diode, a flying capacitor and a controller. When the difference between the voltage of a direct-current bus and the voltage of the flying capacitor is greater than or equal to the withstand voltage of the second diode, the controller controls the DC-DC converter not to operate, so as to reduce the voltage of the direct-current bus. When the voltage of the direct-current bus is extra high or a pre-charge voltage of the flying capacitor is extra low, the DC-DC converter operates, and thus the second diode bears an extra-high voltage and is easily damaged. Therefore, by means of reducing the voltage of the direct-current bus, the voltage of the flying capacitor Cf is synchronously raised by means of charging until the difference between the voltage of the direct-current bus and the voltage of the flying capacitor is less than the withstand voltage of the second diode, and then the DC-DC converter operates, such that the safety of the second diode can be ensured.

## Description

The present application claims priority to Chinese Patent disclosure No. 202210992839.2, titled "FLYING CAPACITOR THREE-LEVEL DC-DC CONVERTER, PHOTOVOLTAIC SYSTEM AND CONTROL METHOD", filed on August 18, 2022 with the China National Intellectual Property Administration, which is incorporated herein by reference in its entirety.

### FIELD

The present disclosure relates to the technical field of power electronics, and in particular to a three-level flying capacitor DCDC converter, a photovoltaic system and a method for controlling the three-level flying capacitor DCDC converter.

### BACKGROUND

In a photovoltaic system, one stage of DCDC converter is usually arranged between a photovoltaic string and an inverter, in order to improve the power generation efficiency of photovoltaic string. The photovoltaic system generally includes multiple DCDC converters, and output ends of the multiple DCDC converters are connected in parallel to form a branch, and the branch is connected to an input end of the inverter. The DCDC converter commonly used in a high-voltage system is generally implemented by a three-level Boost circuit. Compared with a two-level Boost circuit, the three-level Boost circuit is decreased by half in a voltage stress on a power device, significantly decreased in an input current ripple, and decreased in size and cost of an inductor.

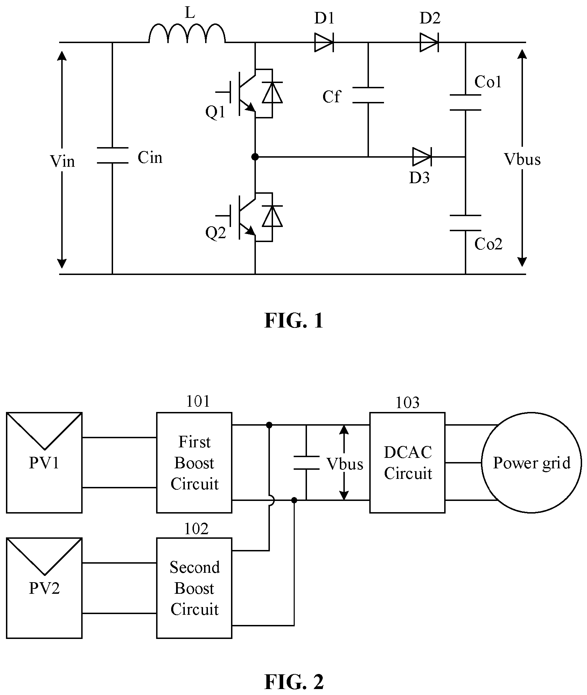

Reference is made to FIG. 1, which is a schematic diagram of a three-level DCDC converter with a flying capacitor and a clamping diode.

The three-level Boost circuit with the flying capacitor includes: an inductor L, a first switching transistor Q1, a second switching transistor Q2, a first diode D1, a second diode D2, a third diode D3 and a flying capacitor Cf. In addition, the three-level Boost circuit further includes an input capacitor Cin, and has an input voltage Vin. The Boost circuit further includes two output capacitors Co1 and Co2 connected in series, and a common point of Co1 and Co2 is a midpoint of a direct-current bus. An output voltage of the Boost circuit is a direct-current bus voltage Vbus. In order to pre-charge the flying capacitor and meet requirements on the voltage stress of each power device synchronously when the Boost circuit is started, the Boost circuit further includes a clamping diode D3. A second terminal of the flying capacitor Cf is connected to the midpoint of the direct-current bus through the third diode D3. A first terminal of the flying capacitor Cf is connected to a common terminal of D1 and D2.

Output ends of multiple Boost circuits in the photovoltaic system are connected in parallel, some Boost circuits may have high input voltages and some Boost circuits may have low input voltages. Hence, the outputted direct-current bus voltage is determined by the Boost circuit with a highest input voltage in a case that the output ends of the multiple Boost circuits are connected in parallel. As a result, the flying capacitor of the Boost circuit with a lower input voltage is charged to a voltage far less than half of the bus voltage, and even fails to be pre-charged. In this case, if the switching transistor in the Boost circuit with the lower input voltage is started, the diode D2 is subjected to an excessively high reverse voltage, resulting in the risk of over-voltage failure.

### SUMMARY

To solve the above problem, a three-level flying capacitor DCDC converter, a photovoltaic system and a method for controlling the three-level flying capacitor DCDC converter are provided according to the present disclosure, to protect the safety of each power device in the three-level flying capacitor DCDC converter.

A three-level flying capacitor DCDC converter is provided according to the present disclosure, and includes an inductor, a first switching transistor, a second switching transistor, a first diode, a second diode, a third diode, a flying capacitor and a controller.

A first terminal of the inductor is connected to a positive input terminal of the three-level flying capacitor DCDC converter. A second terminal of the inductor, an anode of the first diode, and a first terminal of the first switching transistor are all connected to a first node.

A cathode of the first diode, an anode of the second diode, and a first terminal of the flying capacitor are all connected to a second node.

A second terminal of the first switching transistor is connected to a negative input terminal of the three-level flying capacitor DCDC converter through the second switching transistor, a second terminal of the flying capacitor is connected to a midpoint of a direct-current bus through the third diode, a cathode of the second diode is connected to a positive output terminal of the three-level flying capacitor DCDC converter, a negative output terminal of the three-level flying capacitor DCDC converter and a negative input terminal of the three-level flying capacitor DCDC converter are connected to each other.

The controller is configured to stop operation of the three-level flying capacitor DCDC converter and reduce a direct-current bus voltage in response to a difference between the direct-current bus voltage and a voltage of the flying capacitor greater than or equal to a withstand voltage of the second diode.

In an embodiment, the controller is configured to control a DCAC circuit to operate for reducing the direct-current bus voltage, where an input end of the DCAC circuit is configured to connect the direct-current bus; or control a load connected to the direct-current bus to operate for reducing the direct-current bus voltage.

In an embodiment, the controller is further configured to control the three-level flying capacitor DCDC converter to operate in response to the difference between the direct-current bus voltage and the voltage of the flying capacitor less than the withstand voltage of the second diode.

In an embodiment, the controller is configured to control a duty cycle of the second switching transistor to be greater than a duty cycle of the first switching transistor in response to the voltage of the flying capacitor less than a preset voltage; and control the duty cycle of the second switching transistor to be less than the duty cycle of the first switching transistor in response to the voltage of the flying capacitor greater than the preset voltage.

In an embodiment, the controller is further configured to control the duty cycle of the second switching transistor to be equal to the duty cycle of the first switching transistor in response to the voltage of the flying capacitor equal to the preset voltage.

A photovoltaic system is further provided according to the present disclosure, and includes the at least two three-level flying capacitor DCDC converters introduced above, and further includes a DCAC circuit.

Output ends of the at least two three-level flying capacitor DCDC converters are connected in parallel to form a branch, and the branch is connected to an input end of the DCAC circuit. An input end of each of the at least two three-level flying capacitor DCDC converters is configured to connect a corresponding photovoltaic string.

A method for controlling a three-level flying capacitor DCDC converter is further provided according to the present disclosure, where the three-level flying capacitor DCDC converter includes an inductor, a first switching transistor, a second switching transistor, a first diode, a second diode, a third diode and a flying capacitor.

The method includes obtaining a direct-current bus voltage and a voltage of the flying capacitor; and stopping operation of the three-level flying capacitor DCDC converter and reducing the direct-current bus voltage, upon determining that a difference between the direct-current bus voltage and the voltage of the flying capacitor is greater than or equal to a withstand voltage of the second diode.

In an embodiment, the reducing the direct-current bus voltage includes controlling a DCAC circuit to operate for reducing the direct-current bus voltage, where an input end of the DCAC circuit is configured to connect the direct-current bus; or controlling a load connected to the direct-current bus to operate for reducing the direct-current bus voltage.

In an embodiment, the method further includes controlling the three-level flying capacitor DCDC converter to operate in response to the difference between the direct-current bus voltage and the voltage of the flying capacitor less than the withstand voltage of the second diode.

In an embodiment, the controlling the three-level flying capacitor DCDC converter to operate includes controlling a duty cycle of the second switching transistor to be greater than a duty cycle of the first switching transistor in response to the voltage of the flying capacitor less than a preset voltage; and controlling the duty cycle of the second switching transistor to be less than the duty cycle of the first switching transistor in response to the voltage of the flying capacitor greater than the preset voltage.

In an embodiment, the method further includes controlling the duty cycle of the second switching transistor to be equal to the duty cycle of the first switching transistor in response to the voltage of the flying capacitor equal to the preset voltage.

It can be seen that the present disclosure has the following beneficial effects.

The three-level flying capacitor DCDC converter according to the present disclosure determines whether to start the three-level flying capacitor DCDC converter to operate by determining whether the difference between the direct-current bus voltage and the voltage of the flying capacitor is greater than the withstand voltage of the second diode. If the difference between the direct-current bus voltage and the voltage of the flying capacitor is greater than or equal to the withstand voltage of the second diode, it indicates that the direct-current bus voltage is too high or a pre-charged voltage of the flying capacitor is too low, the second diode is subjected to an excessively high voltage and is easily damaged if the DCDC converter operates. Therefore, the voltage of the flying capacitor Cf is synchronously increased through charging as the direct-current bus voltage is reduced until the difference between the direct-current bus voltage and the voltage of the flying capacitor is less than the withstand voltage of the second diode, and then the DCDC converter operates, ensuring the safety of the second diode.

### BRIEF DESCRIPTION OF THE DRAWINGS

FIG. 1 is a schematic diagram of a three-level Boost circuit with a flying capacitor;
FIG. 2 is a schematic diagram of a photovoltaic system according to the present disclosure;
FIG. 3 is a schematic diagram of analysis of a withstand voltage of a second diode according to the present disclosure;
FIG. 4 is a schematic diagram of a three-level flying capacitor DCDC converter according to an embodiment of the present disclosure;
FIG. 5 is a schematic diagram of a photovoltaic system according to an embodiment of the present disclosure; and
FIG. 6 is a flow chart of a method for controlling a three-level flying capacitor DCDC converter according to an embodiment of the present disclosure.

### DETAILED DESCRIPTION

The present disclosure is illustrated in detail in conjunction with the drawings and specific embodiments hereinafter, so that the above purposes, features and advantages of the present disclosure are understandable.

An application scenario of a three-level flying capacitor DCDC converter is not limited in the embodiment of the present disclosure, as long as output ends of multiple DCDC converters are connected in parallel. For example, the three-level flying capacitor DCDC converter may be applied in the scenario of a photovoltaic system, and an input end of each three-level flying capacitor DCDC converter is connected to a corresponding photovoltaic string.

For the convenience of description, the three-level flying capacitor DCDC converter is referred to as a DCDC converter hereinafter.

The following introduction is made with an example of the DCDC converter applied to the photovoltaic system

Reference is made to FIG. 2, which is a schematic diagram of the photovoltaic system.

The photovoltaic system includes two stages, one stage is a DCDC converter and the other stage is a DCAC circuit. The following introduction is made with an example of the DCDC converter including a Boost circuit.

For convenience of description, two Boost circuits are connected in parallel as an example.

An input end of a first Boost circuit 101 is connected to a photovoltaic string PV1. An input end of a second Boost circuit 102 is connected to a photovoltaic string PV2. An output end of the first Boost circuit 101 and an output end of the second Boost circuit 102 are connected in parallel, and are connected to an input end of the DCAC circuit 103. An output end of the DCAC circuit 103 is connected to the power grid or to an alternating-current load. The DCAC circuit 103 is three-phase or single-phase.

The following introduction is made with an example of a three-level Boost circuit with a flying capacitor.

Reference is made to FIG. 1.

The three-level Boost circuit with the flying capacitor includes: an inductor L, a first switching transistor Q1, a second switching transistor Q2, a first diode D1, a second diode D2, a third diode D3 and a flying capacitor Cf.

A first terminal of the inductor L is connected to a positive input terminal of the DCDC converter. A second terminal of the inductor L, an anode of the first diode D1, and a first terminal of the first switching transistor Q1 are all connected to a first node.

A cathode of the first diode D1, an anode of the second diode D2, and a first terminal of the flying capacitor Cf are all connected to a second node.

A second terminal of the first switching transistor Q1 is connected to a negative input terminal of the DCDC converter through the second switching transistor Q2. A second terminal of the flying capacitor Cf is connected to a midpoint of a direct-current bus through the third diode D3. A cathode of the second diode D2 is connected to a positive output terminal of the DCDC converter. A negative output terminal of the DCDC converter and a negative input terminal of the DCDC converter are connected to each other.

D3 can realize the clamping function, which may synchronously pre-charge the flying capacitor Cf and clamp a voltage stress on the switching transistor when the three-level Boost circuit is powered on. The flying capacitor Cf is pre-charged to a voltage close to half of the bus voltage, thereby meeting requirements on the voltage stress of each power device when the Boost circuit is started without an additional pre-charging circuit.

In addition, the Boost circuit further includes an input capacitor Cin. The input capacitor Cin is connected between a positive input terminal and a negative input terminal of the Boost circuit, and the input voltage is Vin. The Boost circuit further includes two output capacitors Co1 and Co2 connected in series. A common point of Co1 and Co2 is a midpoint of the direct-current bus. In principle, Co1 is equal to Co2 in capacitance, and a voltage of the midpoint of the direct-current bus is half of a direct-current bus voltage Vbus. An output voltage is the direct-current bus voltage Vbus.

It should be understood that since an output ends of multiple Boost circuits are connected in parallel to form a branch, and the branch is connected to the direct-current bus, the direct-current bus voltage Vbus affects the output voltage of the single Boost circuit. In a steady state, the output voltage of each Boost circuit is the same as the direct-current bus voltage Vbus.

In an application scenario of the photovoltaic system, input voltages of various Boost circuits may be different. For example, due to on-site terrain of a power station, solar radiation and external environmental factors (such as an inclination angle of a photovoltaic module, component shielded by dark clouds or vegetation and covered by ice, snow, dust, sand or the like), various Boost circuits may be significantly different in the input voltage.

Since the output ends of multiple Boost circuits are connected in parallel, the direct-current bus voltage Vbus is determined by the Boost circuit with a highest input voltage. As a result, the flying capacitor of the Boost circuit with a lower input voltage can only be charged to a voltage far less than half of the direct-current bus voltage Vbus, that is, far less than the half of the bus voltage, and even fails to be pre-charged. Furthermore, since the voltage of the flying capacitor Cf is relatively low, the diode D2 has a risk of over-voltage (Vbus-Vcf) failure if the switching transistor is started to operate (such as Q2 is turned on). Details are illustrated in conjunction with the drawings hereinafter.

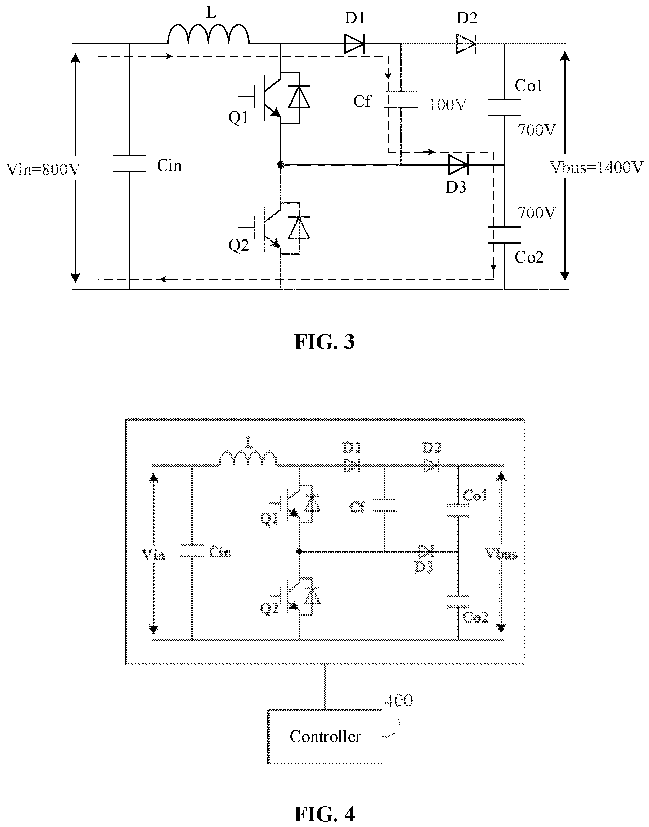

Reference is made to FIG. 3, which is a schematic diagram of analysis of a withstand voltage of a second diode according to the present disclosure.

For example, a 1500V photovoltaic system includes two Boost circuits connected in parallel. Assuming that an input voltage Vin of one Boost circuit is 800V and an input voltage of the other Boost circuit is 1400V, the output bus voltage reaches 1400V.

For the Boost circuit with the input voltage Vin of 800V, the half of the bus voltage, that is, Co1 is equal to Co2 in voltage, the voltage Vco2 is equal to 700V, and the input voltage Vin only pre-charges the flying capacitor Cf to 100V. In this case, if the switching transistor Q2 is directly started to operate, the diode D2 has a risk of high-voltage failure (VD2=Vbus-Vcf=1400V-100V=1300V), where Vcf represents the voltage of the flying capacitor Cf.

In order to solve the above technical problem, a three-level flying capacitor DCDC converter is provided according to the present disclosure, which is illustrated in detail in conjunction with the drawings.

Reference is made to FIG. 4, which is a schematic diagram of a three-level flying capacitor DCDC converter according to an embodiment of the present disclosure.

The connections between the components of the three-level flying capacitor DCDC converter according to the embodiment are referred to the description of FIG. 2, which are not repeated here.

A controller 400 is configured to stop operation of the DCDC converter and reduce the direct-current bus voltage Vbus in response to a difference between the direct-current bus voltage Vbus and the voltage of the flying capacitor Cf greater than or equal to a withstand voltage of the second diode D2.

The withstand voltage of the second diode D2 is not limited in the embodiment of the present disclosure. The second diode may be determined based on a voltage level of the direct-current bus of the application scenario of the three-level flying capacitor DCDC converter. For example, the direct-current bus is at a voltage level about 1500V, at a higher voltage level or a lower voltage level.

During the reduction of the direct-current bus voltage, the flying capacitor Cf is charged gradually, increasing a voltage of the flying capacitor Cf gradually.

A manner in which the direct-current bus voltage Vbus is reduced is not limited in the embodiment of the present disclosure. For example, the controller is configured to control the DCAC circuit to operate for reducing the direct-current bus voltage Vbus. An input end of the DCAC circuit is configured to connect the direct-current bus. An electrical parameter of the DCAC circuit is modified for reducing the direct-current bus voltage Vbus.

Alternatively, the load connected to the direct-current bus is controlled to operate for reducing the direct-current bus voltage Vbus, that is, the direct-current bus voltage Vbus is reduced by consuming energy.

For example, the load may be a switching power supply device, or a discharge circuit device.

The controller 400 is further configured to control the DCDC converter to operate in response to a difference between the direct-current bus voltage Vbus and the voltage of the flying capacitor Cf less than the withstand voltage of the second diode D2. That is, during the operation of the DCDC converter, the second diode D2 is not subjected to an excessively high withstand voltage and is not damaged.

The controller 400 controls the DCDC converter to operate mainly by sending driving signals to Q1 and Q2 to turn on or off Q1 and Q2. The controller 400 stops the operation of the DCDC converter by stopping sending driving signals, i.e., pulse blocking, and Q1 and Q2 keep off and do not operate.

The three-level flying capacitor DCDC converter according to the embodiment of the present disclosure determines whether to start the three-level flying capacitor DCDC converter to operate by determining whether the difference between the direct-current bus voltage and the voltage of the flying capacitor is greater than the withstand voltage of the second diode. If the difference between the direct-current bus voltage and the voltage of the flying capacitor is greater than or equal to the withstand voltage of the second diode, it indicates that the direct-current bus voltage is too high or a pre-charged voltage of the flying capacitor is too low, the second diode is subjected to an excessively high voltage and is easily damaged if the DCDC converter operates. Therefore, the voltage of the flying capacitor Cf is synchronously increased through charging as the direct-current bus voltage is reduced until the difference between the direct-current bus voltage and the voltage of the flying capacitor is less than the withstand voltage of the second diode, and then the DCDC converter operates, ensuring the safety of the second diode.

In the three-level flying capacitor DCDC converter according to the embodiment of the present disclosure, the DCDC converter can be directly started, even under a condition of high direct-current bus voltage and the low input voltage of one DCDC converter, thereby widening an MPPT operating range of the DCDC converter and improving the power generation capacity of the system. In addition, with the solution, problems of the voltage stress risk of the diode and the pre-charging the flying capacitor at startup are solved without additional cost by using a software control solution in a case of the high direct-current bus voltage and the low input voltage of the DCDC converter.

The controller controls the DCDC converter to operate in the following three situations.

In a first situation, the controller is configured to control a duty cycle of the second switching transistor to be greater than a duty cycle of the first switching transistor in response to the voltage of the flying capacitor less than a preset voltage. That is, the voltage of the flying capacitor is increased for charging the flying capacitor.

In a second situation, the controller is configured to control the duty cycle of the second switching transistor to be less than the duty cycle of the first switching transistor in response to the voltage of the flying capacitor greater than the preset voltage. That is, the voltage of the flying capacitor is reduced to cause the flying capacitor to discharge.

In a third situation, the controller is further configured to control the duty cycle of the second switching transistor to be equal to the duty cycle of the first switching transistor in response to the voltage of the flying capacitor equal to the preset voltage.

The three-level flying capacitor DCDC converter according to the embodiment of the present disclosure can not only ensure the safety of the second diode, but further stabilize the voltage of the flying capacitor at the preset voltage under the premise that the second diode operates safely.

In addition, the three-level flying capacitor DCDC converter according to the embodiment of the present disclosure may further detect the input voltage of the three-level flying capacitor DCDC converter in a real time manner, that is, a voltage of the photovoltaic string. In a case that the input voltage of the three-level flying capacitor DCDC converter is too low, the voltage of the flying capacitor fails to be increased by charging even if the three-level flying capacitor DCDC converter does not operate, that is, even if the direct-current bus voltage is reduced with the method according to the present disclosure, the difference between the direct-current bus voltage and the voltage of the flying capacitor fails to be less than the withstand voltage of the second diode. Therefore, it is determined whether to adopt the above control manner, that is, whether to stop the operation of the DCDC converter and to reduce the direct-current bus voltage by determining the input voltage of the three-level flying capacitor DCDC converter.

Based on the three-level flying capacitor DCDC converter according to the above embodiment, a photovoltaic system is further provided according to an embodiment of the present disclosure. Details are illustrated in conjunction with the drawings.

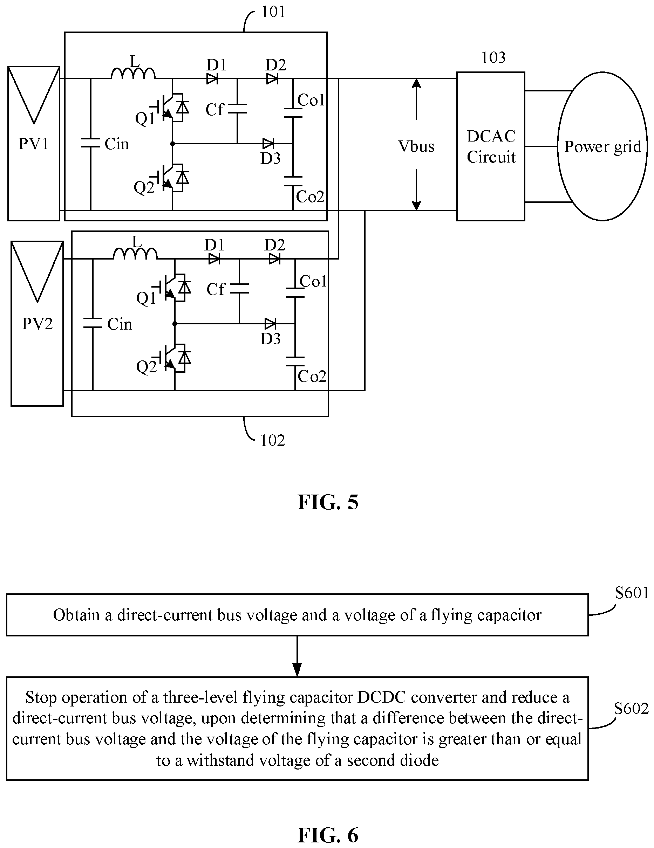

Reference is made to FIG. 5, which is a schematic diagram of a photovoltaic system according to an embodiment of the present disclosure.

The photovoltaic system according to the embodiment of the present disclosure at least includes the three-level flying capacitor DCDC converter introduced above. The number of the three-level flying capacitor DCDC converter connected in parallel is not limited in the embodiment of the present disclosure. For the convenience of description, two three-level flying capacitor DCDC converters are introduced as an example in FIG. 5, i.e., a first three-level flying capacitor DCDC converter 101 and a second three-level flying capacitor DCDC converter 102. An input end of each three-level flying capacitor DCDC converter is configured to connect a corresponding photovoltaic string. That is, the input end of the first three-level flying capacitor DCDC converter 101 is connected to PV1, and the input end of the second three-level flying capacitor DCDC converter 102 is connected to PV2.

The photovoltaic system further includes a DCAC circuit 103.

The output ends of the at least two three-level flying capacitor DCDC converters are connected in parallel to form a branch, and the branch is connected to an input end of the DCAC circuit 103, that is, both the output end of the first three-level flying capacitor DCDC converter 101 and the output end of the second three-level flying capacitor DCDC converter 102 are connected to the input end of the DCAC 103 circuit.

For example, the input voltage Vin of the first three-level flying capacitor DCDC converter 101 is 800V, the input voltage of the second three-level flying capacitor DCDC converter 102 is 1400V, and the direct-current bus voltage Vbus reaches 1400V. In this case, D2 in the first three-level flying capacitor DCDC converter 101 has the risk of failure if Q2 in the first three-level flying capacitor DCDC converter 101 is turned on. Therefore, in order to protect D2, the controller stops the operation of the first three-level flying capacitor DCDC converter 101 and the operation of the second three-level flying capacitor DCDC converter 102, reduces the direct-current bus voltage Vbus until the difference between the direct-current bus voltage and the voltage of the flying capacitor is less than the withstand voltage of D2, and then controls the first three-level flying capacitor DCDC converter 101 and the second three-level flying capacitor DCDC converter 102 to operate.

The photovoltaic system according to the embodiment of the present disclosure can ensure the safety of the second diode in each three-level flying capacitor DCDC converter, thus ensuring the safety of each three-level flying capacitor DCDC converter, so that the photovoltaic system can operate normally, thereby improving the power generation efficiency of the photovoltaic system.

Based on the three-level flying capacitor DCDC converter and the photovoltaic system according to the above embodiments, a method for controlling the three-level flying capacitor DCDC converter is further provided according to an embodiment of the present disclosure, which is illustrated in detail below in conjunction with the drawings.

Reference is made to FIG. 6, which is a flow chart of the method for controlling the three-level flying capacitor DCDC converter according to the embodiment of the present disclosure.

The method for controlling the three-level flying capacitor DCDC converter according to the embodiment is applied to the three-level flying capacitor DCDC converter introduced in the above embodiments, where the three-level flying capacitor DCDC converter includes an inductor, a first switching transistor, a second switching transistor, a first diode, a second diode, a third diode and a flying capacitor.

The method includes the following S601 and S602.

In S601, a direct-current bus voltage and a voltage of the flying capacitor are obtained.

In S601, upon determining that a difference between the direct-current bus voltage and the voltage of the flying capacitor is greater than or equal to a withstand voltage of the second diode, operation of the three-level flying capacitor DCDC converter is stopped and the direct-current bus voltage is reduced.

The process of reducing the direct-current bus voltage includes as follows.

The DCAC circuit is controlled to operate for reducing the direct-current bus voltage, where an input end of the DCAC circuit is configured to connect the direct-current bus.

Alternatively, a load connected to the direct-current bus is controlled to operate for reducing the direct-current bus voltage.

The method according to the embodiment further includes: controlling the DCDC converter to operate in response to the difference between the direct-current bus voltage and the voltage of the flying capacitor less than the withstand voltage of the second diode.

Where, the process of controlling the operation of the DCDC converter includes controlling a duty cycle of the second switching transistor to be greater than a duty cycle of the first switching transistor in response to the voltage of the flying capacitor less than a preset voltage; and controlling the duty cycle of the second switching transistor to be less than the duty cycle of the first switching transistor in response to the voltage of the flying capacitor greater than the preset voltage

The method further includes controlling the duty cycle of the second switching transistor to be equal to the duty cycle of the first switching transistor in response to the voltage of the flying capacitor equal to the preset voltage, ensuring a balance between the charging and discharging of the flying capacitor.

With the method for controlling the three-level flying capacitor DCDC converter according to the embodiment of the present disclosure, it is determined whether to start the three-level flying capacitor DCDC converter to operate by determining whether the difference between the direct-current bus voltage and the voltage of the flying capacitor is greater than the withstand voltage of the second diode. If the difference between the direct-current bus voltage and the voltage of the flying capacitor is greater than or equal to the withstand voltage of the second diode, it indicates that the direct-current bus voltage is too high or a pre-charged voltage of the flying capacitor is too low, the second diode is subjected to an excessively high voltage and is easily damaged if the DCDC converter operates. Therefore, the voltage of the flying capacitor Cf is synchronously increased through charging as the direct-current bus voltage is reduced until the difference between the direct-current bus voltage and the voltage of the flying capacitor is less than the withstand voltage of the second diode, and then the DCDC converter operates, ensuring the safety of the second diode.

Those skilled in the art can implement or practice the present disclosure based on the above description of the disclosed embodiments. Various modifications made to the embodiments are apparent to those skilled in the art. The general principle defined herein may be implemented in other embodiments without departing from the spirit and scope of the present disclosure. Therefore, the present disclosure should not be limited to the embodiments disclosed herein, but has the widest scope in accordance to the concept and the novel features disclosed herein.

## Claims

1. A three-level flying capacitor DCDC converter, comprising:
an inductor;
a first switching transistor;
a second switching transistor;
a first diode;
a second diode;
a third diode;
a flying capacitor; and
a controller, wherein
a first terminal of the inductor is connected to a positive input terminal of the three-level flying capacitor DCDC converter, a second terminal of the inductor, an anode of the first diode, and a first terminal of the first switching transistor are all connected to a first node;
a cathode of the first diode, an anode of the second diode, and a first terminal of the flying capacitor are all connected to a second node;
a second terminal of the first switching transistor is connected to a negative input terminal of the three-level flying capacitor DCDC converter through the second switching transistor, a second terminal of the flying capacitor is connected to a midpoint of a direct-current bus through the third diode, a cathode of the second diode is connected to a positive output terminal of the three-level flying capacitor DCDC converter, a negative output terminal of the three-level flying capacitor DCDC converter and a negative input terminal of the three-level flying capacitor DCDC converter are connected to each other; and
the controller is configured to stop operation of the three-level flying capacitor DCDC converter and reduce a direct-current bus voltage in response to a difference between the direct-current bus voltage and a voltage of the flying capacitor greater than or equal to a withstand voltage of the second diode.

2. The three-level flying capacitor DCDC converter according to claim 1, wherein the controller is configured to:
control a DCAC circuit to operate for reducing the direct-current bus voltage, wherein an input end of the DCAC circuit is configured to connect the direct-current bus; or
control a load connected to the direct-current bus to operate for reducing the direct-current bus voltage.

3. The three-level flying capacitor DCDC converter according to claim 1 or 2, wherein the controller is further configured to:
control the three-level flying capacitor DCDC converter to operate in response to the difference between the direct-current bus voltage and the voltage of the flying capacitor less than the withstand voltage of the second diode.

4. The three-level flying capacitor DCDC converter according to claim 3, wherein the controller is configured to:
control a duty cycle of the second switching transistor to be greater than a duty cycle of the first switching transistor in response to the voltage of the flying capacitor less than a preset voltage; and
control the duty cycle of the second switching transistor to be less than the duty cycle of the first switching transistor in response to the voltage of the flying capacitor greater than the preset voltage.

5. The three-level flying capacitor DCDC converter according to claim 4, wherein the controller is further configured to:
control the duty cycle of the second switching transistor to be equal to the duty cycle of the first switching transistor in response to the voltage of the flying capacitor equal to the preset voltage.

6. A photovoltaic system, comprising the at least two three-level flying capacitor DCDC converters according to any one of claims 1 to 5, wherein the photovoltaic system further comprises a DCAC circuit, wherein
output ends of the at least two three-level flying capacitor DCDC converters are connected in parallel to form a branch, and the branch is connected to an input end of the DCAC circuit; and
an input end of each of the at least two three-level flying capacitor DCDC converters is configured to connect a corresponding photovoltaic string.

7. A method for controlling a three-level flying capacitor DCDC converter, wherein the three-level flying capacitor DCDC converter comprises an inductor, a first switching transistor, a second switching transistor, a first diode, a second diode, a third diode and a flying capacitor, and the method comprises:
obtaining a direct-current bus voltage and a voltage of the flying capacitor; and
stopping operation of the three-level flying capacitor DCDC converter and reducing the direct-current bus voltage, upon determining that a difference between the direct-current bus voltage and the voltage of the flying capacitor is greater than or equal to a withstand voltage of the second diode.

8. The method according to claim 7, wherein the reducing the direct-current bus voltage comprises:
controlling a DCAC circuit to operate for reducing the direct-current bus voltage, wherein an input end of the DCAC circuit is configured to connect the direct-current bus; or
controlling a load connected to the direct-current bus to operate for reducing the direct-current bus voltage.

9. The method according to claim 7 or 8, further comprising:
controlling the three-level flying capacitor DCDC converter to operate in response to the difference between the direct-current bus voltage and the voltage of the flying capacitor less than the withstand voltage of the second diode.

10. The method according to claim 9, wherein the controlling the three-level flying capacitor DCDC converter to operate comprises:
controlling a duty cycle of the second switching transistor to be greater than a duty cycle of the first switching transistor in response to the voltage of the flying capacitor less than a preset voltage; and
controlling the duty cycle of the second switching transistor to be less than the duty cycle of the first switching transistor in response to the voltage of the flying capacitor greater than the preset voltage.

11. The method according to claim 10, further comprising:
controlling the duty cycle of the second switching transistor to be equal to the duty cycle of the first switching transistor in response to the voltage of the flying capacitor equal to the preset voltage.
